# EUROPÄISCHE PATENTANMELDUNG

(11) **EP 3 984 818 A1**
(43) Veröffentlichungstag der Anmeldung: **20.04.2022**
(21) Anmeldenummer: 20202590.4
(22) Anmeldetag: 19.10.2020
(51) Int. Cl.: B60Q 1/00, B60Q 1/14, F21S 41/13, F21S 41/153

(54) **BELEUCHTUNGSVORRICHTUNG FÜR EINEN KRAFTFAHRZEUGSCHEINWERFER**

(71) Anmelder: ZKW Group GmbH, 3250 Wieselburg (AT)
(72) Erfinder: Hartmann, Peter, 3392 Schönbühel an der Donau (AT); Artmann, Matthäus, 3370 Ybbs an der Donau (AT); Brandstetter, Martin, 3370 Ybbs (AT)
(74) Vertreter: Patentanwaltskanzlei Matschnig & Forsthuber OG

(57) **Zusammenfassung**

Beleuchtungsvorrichtung (10) für einen Kraftfahrzeugscheinwerfer zum Erkennen und gezielten Ausblenden eines vor der Beleuchtungsvorrichtung (10) vorhandenen, Licht abstrahlenden Objekts (20) in einer segmentierten Lichtverteilung, welche Beleuchtungsvorrichtung (10) Folgendes umfasst:
- eine Lichterzeugungseinheit (100), mit mehreren Leuchtpixel-Gruppen (110a, 110b, 110c, 110d)
- eine Lichtsensorvorrichtung (200) zum Erkennen von Licht eines Licht abstrahlenden Objekts (20) mit einem ersten Lichtsensor (210) mit mehreren erste Sensorpixel (211),
- eine Steuereinheit (300), welche mit der Lichterzeugungseinheit (100) und der Lichtsensorvorrichtung (200) verbunden ist und eingerichtet ist, die Lichterzeugungseinheit (100) zur Erzeugung der segmentierten Lichtverteilung anzusteuern,
wobei ein Sensorpixel (211) Licht in einem Detektions-Raumwinkel (DRa, DRb, DRc, DRd) detektieren kann und jeweils einer Leuchtpixel-Gruppe (110a, 110b, 110c, 110d) zugeordnet ist, und wobei das auf jeden ersten Sensorpixel (211) einfallende Licht als dem jeweiligen ersten Sensorpixel (211) zugeordneten Lichtstromwert erfassbar ist,
wobei die Lichtsensorvorrichtung (200) zur Abstandsmessung zusätzlich einen zweiten Lichtsensor (220) aufweist, und wobei die Steuereinheit (300) eingerichtet ist, die von den jeweiligen ersten Sensorpixeln (211) detektierten Lichtstromwerte einzeln mit einem jeweils festlegbaren Schwellwert zu vergleichen und bei einem Überschreiten des Schwellenwertes den Lichtstrom der entsprechenden Leuchtpixel-Gruppen (110a, 110b, 110c, 110d) zu reduzieren,
wobei im Falle, dass in zwei Detektions-Raumwinkeln (DRa, DRc) ein Überschreiten des Schwellenwertes festgestellt wird und in einem zwischen dieser zwei Detektions-Raumwinkeln (DRa, DRc) ein Detektions-Raumwinkel (DRb) keine Überschreitung des Schwellenwertes festgestellt wird, die Steuereinheit (300) eingerichtet ist, eine vermutliche Objektbreite abzuleiten, und mit einer tatsächlichen Objektbreite zu vergleichen, welche tatsächliche Objektbreite mittels dem zweiten Lichtsensor (220) ermittelbar ist,
wobei wenn die vermutliche Objektbreite mit der tatsächlichen Objektbreite übereinstimmt, die Steuereinrichtung (300) eingerichtet ist, den Lichtstrom der entsprechenden Leuchtpixel-Gruppen (110a, 110b, 110c) zu reduzieren.

## Beschreibung

Die Erfindung betrifft eine Beleuchtungsvorrichtung für einen Kraftfahrzeugscheinwerfer zum Erkennen und gezielten Ausblenden eines vor der Beleuchtungsvorrichtung vorhandenen, Licht abstrahlenden Objekts in einer segmentierten Lichtverteilung, welche Beleuchtungsvorrichtung Folgendes umfasst:
- eine Lichterzeugungseinheit, welche mehrere Leuchtpixel umfasst, welche in einem Leuchtpixel-Array in Zeilen und Spalten angeordnet sind, wobei die Lichterzeugungseinheit eingerichtet ist, eine segmentierte Lichtverteilung in eine Hauptabstrahlrichtung vor der Beleuchtungsvorrichtung abzustrahlen,
- eine Lichtsensorvorrichtung zum Erkennen von Licht eines Licht abstrahlenden Objekts mit einem ersten Lichtsensor, welcher erste Lichtsensor mehrere erste Sensorpixel aufweist, welche in einer Zeile angeordnet sind, wobei die ersten Sensorpixel eingerichtet sind, Lichtstrom von auf den ersten Lichtsensor einfallendem Licht in einem Wellenlängenbereich von 380 nm bis 780 nm zu erfassen,
- eine Steuereinheit, welche mit der Lichterzeugungseinheit und der Lichtsensorvorrichtung verbunden ist und eingerichtet ist, die Lichterzeugungseinheit zur Erzeugung der segmentierten Lichtverteilung anzusteuern.

Ferner betrifft die Erfindung einen Kraftfahrzeugscheinwerfer mit zumindest einer erfindungsgemäßen Beleuchtungsvorrichtung.

ADB-Systeme beziehungsweise ADB-Kraftfahrzeugscheinwerfer umfassen gewöhnlich eine Umgebungsaufnahmeeinrichtung, wie z.B. eine Kamera oder ein Kamera-System, und ein Kraftfahrzeugscheinwerfer-System. Die - wohl bekannte - Funktionsweise eines ADB-Systems besteht darin, dass das Kraftfahrzeugscheinwerfer-System in Abhängigkeit von Informationen, die die Umgebungsaufnahmeeinrichtung dem Kraftfahrzeugscheinwerfer-System zur Verfügung stellt, die Kraftfahrzeugscheinwerfer steuert und beispielsweise entsprechende Bereiche der mittels der Kraftfahrzeugscheinwerfer erzeugten Lichtverteilung ausblendet oder dimmt.

Bei den ADB-Systemen des Matrixtyps wird ein Ausblend-Bereich meistens mittels Ausschaltens/Abblendens entsprechender Lichtquelle erzeugt. Die vorgenannte Beleuchtungsvorrichtung für einen Kraftfahrzeugscheinwerfer ist vorzugsweise eine Vorrichtung des Matrixtyps.

Insbesondere aus Sicht der Kraftfahrzeugscheinwerfer-Hersteller ist es bei ADB-Systemen nachteilhaft, dass die Umgebungsaufnahmeeinrichtung von dem Kraftfahrzeugscheinwerfer-System baulich getrennt ist. Üblicherweise stammen die vorgenannten wesentlichen Teile eines ADB-Systems von unterschiedlichen Herstellern. Typischerweise weist ein Kraftfahrzeugscheinwerfer-System eine Schnittstelle auf, die zum Einspeisen von seitens der Umgebungsaufnahmeeinrichtung zur Verfügung gestellten Informationen vorgesehen ist. Das führt z.B. dazu, dass ein Kraftfahrzeugscheinwerfer-Hersteller beim Einstellen von Abblendszenarien auf die Informationen angewiesen ist, die von einer extern zur Verfügung gestellten, beispielsweise gekauften Umgebungsaufnahmeeinrichtung geliefert werden. Die genannte Information ist oft in Form von so genannten Objektlisten vorhanden. Solche Objektlisten erzeugt die Umgebungsaufnahmeeinrichtung, indem sie beispielsweise mit dem vorgenannten Kamera-System Bilder in dem Sichtfeld (Engl. "Field of View") des Kamera-Systems aufnimmt, wobei das Sichtfeld vorzugsweise an den relevanten Bereich vor dem Kraftfahrzeug angepasst ist, und diese Bilder mithilfe einer in der Umgebungsaufnahmeeinrichtung vorhandenen Recheneinheit auswertet. Dabei wird unter der Anpassung des Sichtfeldes an den relevanten Bereich verstanden, dass das Sichtfeld einen Öffnungswinkel aufweist, der zur Erfassung zumindest der vor dem Kraftfahrzeug befindlichen Fahrbahn ausreichend groß ist. Als Output liefert die Recheneinheit die vorgenannten Objektlisten. Als Objekte in solchen Listen können beispielsweise Fahrzeuge, wie LKWs, PKWs, Motorräder usw. vorkommen. Jedem einzelnen Objekt werden typischerweise Koordinaten in dem Koordinatensystem des Kamera-Systems zugeordnet. Dieses Ursprungs-Koordinatensystem hat somit oft den Ursprung in etwa an der hinteren Seite des Rückspiegels in dem Innenraum des Kraftfahrzeugs, da dort üblicherweise eine Kamera des Kamera-Systems angeordnet ist.

Wenn nun das Steuersystem als Input eine solche Objektliste bekommt, rechnet es entsprechend der Objektliste ein zu erzeugendes Lichtbild aus. Dabei müssen zunächst die Koordinaten der Objekte in ein Koordinatensystem der Kraftfahrzeugscheinwerfer umgerechnet werden. Dies erfordert relativ hohe Rechenleistung, verursacht relevante Zeitverzögerung und ist eine mögliche Fehlerquelle. Außerdem kommt es oft zu zusätzlichen Fehlern, die durch Fehlerkennung der Objekte seitens der Recheneinheit der Umgebungsaufnahmeeinrichtung entstehen. Ein nicht selten vorkommender Fehler dieser Art ist eine Verwechslung zwischen einem vorausfahrenden LKW und zwei Motorrädern - die Recheneinheit erkennt anhand einer ersten Aufnahme Rückleuchten eines LKW, wobei bei einer zweiten beispielsweise darauffolgenden Aufnahme dieselben Rückleuchten als zwei Motorräder interpretiert werden. Da das Steuersystem des Kraftfahrzeugscheinwerfer-Systems diese Daten nicht beeinflussen kann, kann ein periodisches Auf- und Abblenden eines Bereiches zwischen den Rückleuchten entstehen, je nachdem ob die Rückleuchten in der Objektliste den zwei Motorrädern (Aufleuchten) oder dem LKW (Ausblenden) zugeordnet sind. Dies kann unter Umständen zu einer Blendung des Fahrers aufgrund einer Lichtreflexion führen.

Ferner kann der Fall auftreten, dass beispielsweise ein entgegenkommendes mehrspuriges Kraftfahrzeug mit üblicherweise zwei zueinander beabstandeten Kraftfahrzeugscheinwerfern lediglich als zwei von einander unabhängige Lichtquellen von der Sensoreinheit wahrgenommen werden, wobei jeweils zwei Sensorpixel des Lichtsensors aufgrund einer Überschreitung eines festlegbaren Lichtstrom-Schwellenwertes "aktiviert" werden, wobei zwischen diesen zwei aktivierten Sensorpixeln ein Sensorpixel liegt, welcher nicht aktiviert wurde. Die Steuereinheit wäre lediglich dazu veranlasst, den Lichtstrom der zu den zwei "aktivierten" Sensorpixeln zugeordneten Leuchtpixel-Gruppen zu reduzieren, wodurch ein Fahrer des entgegenkommenden Fahrzeuges geblendet wird.

Es ist eine Aufgabe der Erfindung eine verbesserte Beleuchtungsvorrichtung bereitzustellen.

Diese Aufgabe wird dadurch gelöst, dass die Lichterzeugungseinheit, die Lichtsensorvorrichtung und die Steuereinheit gemeinsam auf einem Grundträger angeordnet sind, und gemeinsam mit dem Grundträger eine Baueinheit bilden,
wobei die Leuchtpixel des Leuchtpixel-Arrays mehrere Leuchtpixel-Gruppen unterteilt sind, wobei jeweils eine Leuchtpixel-Gruppe ein Segment der segmentierten Lichtverteilung in einem Leucht-Raumwinkel erzeugen kann, wobei jede Leuchtpixel-Gruppe zumindest ein Leuchtpixel umfasst,
und wobei jeweils ein Sensorpixel von den mehreren ersten Sensorpixeln Licht in einem dem jeweiligen Sensorpixel zugeordneten Detektions-Raumwinkel detektieren kann und jeweils einer Leuchtpixel-Gruppe zugeordnet ist, wobei jedem Sensorpixel der mehreren ersten Sensorpixel ein unterschiedlicher Detektions-Raumwinkel zugeordnet ist, wobei die Detektions-Raumwinkel im Wesentlichen aneinander angrenzen und einen Gesamt-Detektions-Raumwinkel bilden, in welchen Licht des Licht abstrahlenden Objekts erkannt werden kann, und wobei das auf jeden ersten Sensorpixel einfallende Licht als dem jeweiligen ersten Sensorpixel zugeordneten Lichtstromwert erfassbar ist,
wobei der von einem ersten Sensorpixel detektierbare Detektions-Raumwinkel im Wesentlichen ident ist mit dem Leucht-Raumwinkel der jeweils zugeordneten Leuchtpixel-Gruppe,
wobei die Beleuchtungsvorrichtung zur Abstandsmessung eines vor der Beleuchtungsvorrichtung vorhandenen Objekts eine Laserstrahlerzeugungseinrichtung aufweist, welche eingerichtet ist, zumindest einen Laserstrahl in einem Wellenlängenbereich von 780 nm bis 1 mm vor die Beleuchtungsvorrichtung abzustrahlen und in horizontaler Orientierung zu verändern,
wobei die Lichtsensorvorrichtung zusätzlich einen zweiten Lichtsensor umfasst, welcher zweite Lichtsensor mehrere zweite Sensorpixel umfasst, welche in einer Zeile angeordnet sind, wobei die zweiten Sensorpixel eingerichtet sind, Lichtstrom im Wellenlängenbereich des Laserstrahls der Laserstrahlerzeugungseinheit von auf den zweiten Lichtsensor einfallendem Licht zu erfassen,
und wobei die Steuereinheit eingerichtet ist, die von den jeweiligen ersten Sensorpixeln detektierten Lichtstromwerte einzeln mit einem jeweils festlegbaren Schwellwert zu vergleichen und bei einem Überschreiten des Schwellenwertes den Lichtstrom der entsprechenden Leuchtpixel-Gruppen zu reduzieren,
wobei im Falle, dass in zwei ersten Detektions-Raumwinkeln ein Überschreiten des Schwellenwertes festgestellt wird und in zumindest einem zwischen dieser zwei Detektions-Raumwinkeln ein Detektions-Raumwinkel keine Überschreitung des Schwellenwertes festgestellt wird, die Steuereinheit eingerichtet ist, eine vermutliche Objektbreite abzuleiten,
welche mit der Anzahl der ersten Sensorpixel, welche sich aus den zwei Detektions-Raumwinkeln, bei welchen der Schwellenwert überschritten ist, und den zwischen diesen zwei Detektions-Raumwinkeln liegenden Detektions-Raumwinkeln zusammensetzt, korrespondiert, und mit einer tatsächlichen Objektbreite zu vergleichen, welche tatsächliche Objektbreite mittels einer Laufzeitmessung des an dem Objekt reflektierenden Laserstrahls durch den zweiten Lichtsensor ermittelbar ist,
wobei wenn die vermutliche Objektbreite mit der tatsächlichen Objektbreite übereinstimmt, die Steuereinrichtung eingerichtet ist, den Lichtstrom der entsprechenden Leuchtpixel-Gruppen, welche den ersten Sensorpixeln der vermutlichen Objektbreite zugeordnet sind, trotz eines fehlenden Überschreitens des Schwellenwertes in den Detektions-Raumwinkeln zwischen den Detektions-Raumwinkeln, bei welchen der Schwellenwert überschritten ist, zu reduzieren.

Bei der Triangulationsmessung ist der Abstand zwischen der Laserstrahlerzeugungseinheit und den einzelnen zweiten Sensorpixeln des zweiten Lichtsensors bekannt, wobei ebenso der Winkel, in welchem der Laserstrahl in seiner zumindest einen Zeile emittiert wird, bekannt ist und durch die Steuereinheit ermittelbar bzw. abrufbar ist. Ferner ist ebenso der Winkel des an dem Objekt reflektierenden Laserstrahls erfassbar, beispielsweise durch den entsprechenden zweiten Sensorpixel des zweiten Lichtsensors und dadurch bekannt, wodurch der Abstand des Bereichs des Objekts, welcher Bereich von dem Laserstrahl getroffen und reflektiert wird, durch die Steuereinheit ermittelbar bzw. ausrechenbar ist.

Es sei angemerkt, dass die tatsächliche Objektbreite jener Anzahl an zweiten Sensorpixeln entsprechen kann, bei welchen Licht des an dem Objekt reflektierenden Laserstrahls erfasst wird. Dabei korrespondieren die zweiten Sensorpixeln mit den ersten Sensorpixeln, wobei die Anzahl der ersten und zweiten Sensorpixeln gleich ist und je einem ersten Sensorpixel genau ein zweiter Sensorpixel zugeordnet ist. Folgend ist auch jedem zweiten Sensorpixel die entsprechende Leuchtpixel-Gruppe des entsprechenden ersten Sensorpixels zugeordnet.

Hierdurch lässt sich auch eine tatsächliche Objektbreit bzw. Objektgröße des vor der Beleuchtungsvorrichtung vorhandenen Objekts bestimmen bzw. ableiten, da durch den in horizontaler Orientierung veränderbaren Laserstrahl mehrere Punkte des Objekts abgetastet bzw. gescannt werden, wodurch die Objektbreite bzw. Objektgröße bestimmbar ist.

Es kann vorgesehen sein, dass im Falle, dass in einem Detektions-Raumwinkel ein Überschreiten des Schwellenwertes festgestellt wird, die Steuereinheit eingerichtet ist, eine vermutliche Objektbreite abzuleiten, welche mit dem ersten Sensorpixel korrespondiert, bei welchem der Schwellenwert überschritten ist, und mit einer tatsächlichen Objektbreite zu vergleichen, welche tatsächlich Objektbreite mittels einer Laufzeitmessung und/oder Triangulationsmessung des an dem Objekt reflektierenden Laserstrahls durch den zweiten Lichtsensor ermittelbar ist, wobei die tatsächliche Objektbreite mit der Anzahl der zweiten Sensorpixel korrespondiert, bei welcher Licht des an dem Objekt reflektierenden Laserstrahles erfasst wird, wobei wenn

die tatsächlich Objektbreite größer ist als die vermutliche Objektbreite, die Steuereinrichtung eingerichtet ist, den Lichtstrom jener Leuchtpixel-Gruppen zu reduzieren, welche mit dem ersten Sensorpixel, bei welchem der Schwellenwert überschritten wurde, und mit jenen ersten Sensorpixeln korrespondieren, deren Detektions-Raumwinkel unmittelbar benachbart zu jenem Detektions-Raumwinkel ist, bei welchen ein Überschreiten des Schwellenwertes festgestellt wurde, oder den ersten Sensorpixeln, welche mit den zweiten Sensorpixeln korrespondieren, bei welchen die tatsächliche Objektbreite ermittelt wurde.

Es kann vorgesehen sein, dass der Abstand des Objekts zur Beleuchtungsvorrichtung ermittelbar ist. Ein besonders simpler Aufbau ergibt sich, wenn der Grundträger einstückig ausgebildet ist.

Es kann vorgesehen sein, dass der Grundträger einen Kühlkörper aufweist, an dem der Lichtsensor, das Leuchtmittel und die Steuereinheit angeordnet sind.

Darüber hinaus kann es mit Vorteil vorgesehen sein, dass der Grundträger eine Leiterplatte aufweist, wobei der Lichtsensor, das Leuchtmittel und die Steuereinheit auf der Leiterplatte angebracht sind. Es sei angemerkt, dass in diesem Fall der Lichtsensor, das Leuchtmittel und die Steuereinheit ebenfalls an dem Grundträger angeordnet sind aber mit diesem nicht in Kontakt stehen.

Eine besonders günstige Variante ergibt sich, wenn mehrere Sensorpixel in Form eines in CMOS Technologie gefertigten "Active Pixel Sensors" (APS-CMOS) gruppiert sind, wobei hier einige Peripherischaltungen für die Funktion der Photodiode (A/D-Wandlung, Taktung der Auslesung, Verstärkung) direkt am gleichen Halbleiterbauteil umgesetzt sind.

Bei einer besonders günstigen Variante kann vorgesehen sein, dass ein, insbesondere jedes Leuchtpixel als zumindest eine LED-Lichtquelle ausgebildet ist.

Darüber hinaus ist es denkbar, dass die Steuereinheit mindestens zwei, vorzugsweise genau zwei Mikrocontroller umfasst, die miteinander zur Kommunikation verbunden sind, wobei vorzugsweise ein erster Mikrocontroller eingerichtet ist, den Lichtsensor zu steuern und vorzugsweise ein zweiter Mikrocontroller dazu eingerichtet ist, das Leuchtmittel zu steuern.

Dabei kann es vorteilhaft sein, wenn zumindest einer dieser Microcontroller unmittelbar mit dem photoaktiven Sensorelement verbunden, z.B. direkt hinter diesem im selben Elektronikbauteilgehäuse ("Chip-package") platziert, ist und sensorbezogene Datenvorverarbeitung ausführt. Diese Vorverarbeitung umfasst beispielsweise den Vergleich von Messwerten zwischen Pixeln untereinander und mit hinterlegten Werten bzw. die Auswahl und Ansteuerung von hinterlegten Auswertecharakteristiken (Ausleserate, Belichtungszeiten, Verstärkung).

Es kann vorgesehen sein, dass jeweils ein Sensorpixel von den mehreren zweiten Sensorpixeln Licht in einem dem jeweiligen Sensorpixel zugeordneten Erkennungs-Raumwinkel detektieren kann und jeweils einem Sensorpixel der mehreren ersten Sensorpixel zugeordnet ist, wobei der Erkennungs-Raumwinkel dieses zweiten Sensorpixels im Wesentlichen ident zum entsprechenden Detektions-Raumwinkel des ersten Sensorpixels ist.

Es kann vorgesehen sein, dass der Laserstrahl der Laserstrahlerzeugungseinrichtung scannend vor der Beleuchtungsvorrichtung in zumindest einer horizontalen Zeile emittierbar ist.

Laserscanning, auch Laserabtastung genannt, bezeichnet das zeilen- oder rasterartige Überstreichen von Oberflächen oder Körpern mit einem Laserstrahl, um diese zu vermessen, zu bearbeiten oder um ein Bild zu erzeugen.

Es kann vorgesehen sein, dass der Laserstrahl in zumindest zwei, vorzugsweise vier, Zeilen emittierbar ist, wobei der Laserstrahl jeweils nur eine der zumindest zwei Zeilen scannend emittierbar ist.

Es kann auch vorgesehen sein, dass mehrere Laserstrahlerzeugungseinheiten umfasst sind, die abwechselnd Zeilen in unterschiedlichem vertikalen Abstand scannen bzw. emittieren.

Es kann vorgesehen sein, dass die Anzahl der ersten Sensorpixel gleich der Anzahl der zweiten Sensorpixel ist.

Es kann vorgesehen sein, dass die Steuereinheit eingerichtet ist, den Abstand des vor der Beleuchtungsvorrichtung vorhandenen lichtabstrahlenden Objekts zur Beleuchtungsvorrichtung mittels einer Laufzeitmessung mit Hilfe des zweiten Lichtsensors zu ermitteln.

Es kann vorgesehen sein, dass die segmentierte Lichtverteilung als segmentierte Fernlichtverteilung ausgebildet ist.

Es kann vorgesehen sein, dass die Beleuchtungsvorrichtung zur Aufweitung des Laserstrahls der Lasererzeugungseinheit eine Aufweitungsoptik umfasst.

Es kann vorgesehen sein, dass die Aufweitungsoptik als Zylinderlinse ausgebildet ist, welche eingerichtet ist, den Laserstrahl der Laserstrahlerzeugungseinrichtung in vertikaler Richtung aufzuweiten.

Dadurch soll ein größerer Bereich in vertikaler Richtung abgedeckt werden.

Es kann vorgesehen sein, dass die ersten Sensorpixeln und die zweiten Sensorpixeln in Einbaulage der Beleuchtungsvorrichtung übereinander in jeweils einer Zeile auf einer gemeinsamen Leiterplatte angeordnet sind und besonders bevorzugt, dass die ersten Sensorpixel und die zweiten Sensorpixel auf dem selben Sensorchip, welcher beispielsweise in CMOS Technologie gefertigt ist, angeordnet sind, und wobei die Beleuchtungsvorrichtung eine Sensorlinse umfasst, welcher den ersten und zweiten Sensorpixeln zugeordnet ist.

Es kann vorgesehen sein, dass die Linse als Zylinderlinse ausgebildet ist.

Die gemeinsame Sensorlinse ist asymmetrisch und beispielsweise als Zylinderlinse ausgebildet, um in horizontaler Richtung eine örtliche Auflösung zu gewährleisten, nicht aber im vertikalen Bereich. Ein Sensorpixel betrachtet den gesamten vertikalen Bereich in einer bestimmten horizontalen Richtung.

Dadurch ist eine gute Auflösung in horizontaler Richtung gewährleistet, aber keine Auflösung in vertikaler Richtung. Die Zylinderlinse ermöglicht, dass ich ein gewisser vertikaler Bereich abgedeckt ist; die Auflösung in vertikaler Richtung für die Abstandsmessung erhält man durch den zumindest einen Laserstrahler der Laserstrahlerzeugungseinrichtung, welcher auch abwechselnd in vertikal gestapelte Zeilen emittierbar ist.

Es sei angemerkt, dass bei Vorhandsein von mehreren Zeilen bzw. die Zeilenbereiche, welche abwechselnd von einem Laserstrahl gescannt werden, aneinander angrenzen und sich nicht überlagern.

Es kann vorgesehen sein, dass die ersten Sensorpixeln einen ersten Filter aufweisen, welcher eingerichtet ist, Licht ausschließlich im Wellenlängenbereich von 380 nm bis 780 nm zu transmittieren, wobei die zweiten Sensorpixel einen zweiten Filter aufweisen, welcher eingerichtet ist, Licht ausschließlich im Wellenlängenbereich von 780 nm bis 12 µm zu transmittieren.

Es kann vorgesehen sein, dass der zumindest eine Laserstrahl der Laserstrahlvorrichtung moduliert ist.

Die Aufgabe wird ebenso gelöst durch einen Kraftfahrzeugscheinwerfer mit zumindest einer erfindungsgemäßen Beleuchtungsvorrichtung.

Nachfolgend wird die Erfindung anhand von beispielhaften Zeichnungen näher erläutert. Hierbei zeigt
Fig. 1 eine beispielhafte Beleuchtungsvorrichtung mit einer Lichterzeugungseinheit mit mehreren Leuchtpixel-Gruppen, einer Lichtsensorvorrichtung mit einem ersten und zweiten Lichtsensor, einer Laserstrahlerzeugungseinrichtung und einer die Lichterzeugungseinheit und Lichtsensorvorrichtung ansteuerbare Steuereinheit,
Fig. 2 eine beispielhafte Darstellung eines durch die Laserstrahlerzeugungseinrichtung erzeugbaren Laserstrahls, welcher in mehreren Zeilen in seiner horizontalen Orientierung veränderbar ist,
Fig. 3 eine beispielhafte Fahrsituation mit einem entgegenkommenden Fahrzeug,
Fig. 4 eine auf die Fahrsituation aus Fig. 3 entsprechende Ansteuerung der Sensorpixel des ersten und zweiten Lichtsensors, und eine entsprechende Ansteuerung der Lichtpixelgruppen.

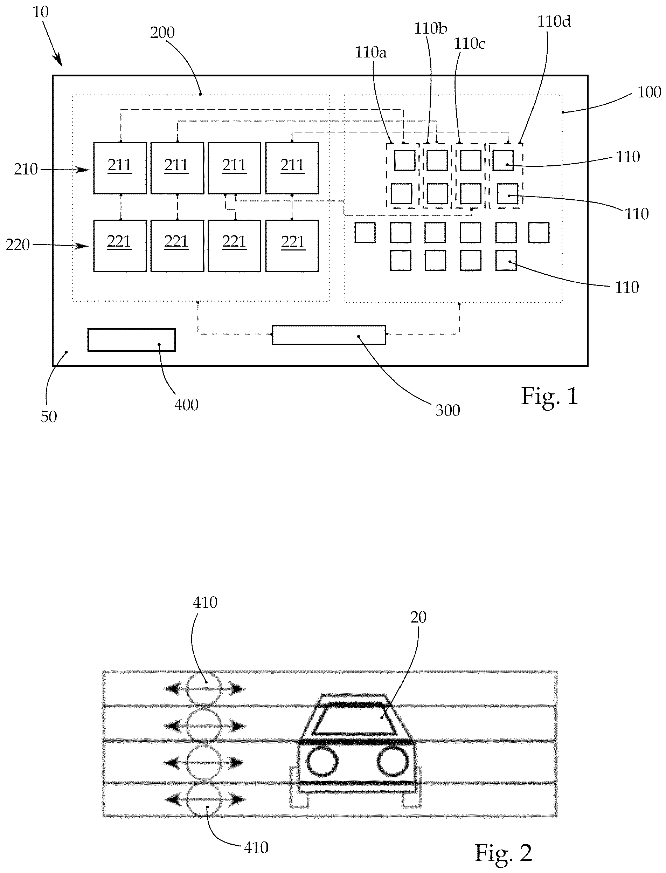

**Fig. 1** zeigt eine beispielhafte Beleuchtungsvorrichtung **10** für einen Kraftfahrzeugscheinwerfer zum Erkennen und gezielten Ausblenden eines vor der Beleuchtungsvorrichtung **10** vorhandenen, Licht abstrahlenden Objekts **20** in einer segmentierten Lichtverteilung, beispielsweise eine Fernlichtverteilung, welche Beleuchtungsvorrichtung **10** eine Lichterzeugungseinheit **100** umfasst, welche mehrere Leuchtpixel **110** aufweist, welche in einem Leuchtpixel-Array in Zeilen und Spalten angeordnet sind, wobei die Lichterzeugungseinheit **100** eingerichtet ist, eine segmentierte Lichtverteilung in eine Hauptabstrahlrichtung vor der Beleuchtungsvorrichtung **10** abzustrahlen.

Ferner umfasst die Beleuchtungsvorrichtung **10** eine Lichtsensorvorrichtung **200** zum Erkennen von Licht eines Licht abstrahlenden Objekts **20** mit einem ersten Lichtsensor **210,** welcher erste Lichtsensor **210** mehrere erste Sensorpixel **211** aufweist, welche in einer Zeile angeordnet sind, wobei die ersten Sensorpixel **211** eingerichtet sind, Lichtstrom von auf den ersten Lichtsensor **210** einfallendem Licht in einem Wellenlängenbereich von 380 nm bis 780 nm, also sichtbares Licht, zu erfassen.

Weiters umfasst die Beleuchtungsvorrichtung **10** eine Steuereinheit **300,** welche mit der Lichterzeugungseinheit **100** und der Lichtsensorvorrichtung **200** verbunden ist und eingerichtet ist, die Lichterzeugungseinheit **100** zur Erzeugung der segmentierten Lichtverteilung anzusteuern, und wobei die Lichterzeugungseinheit **100,** die Lichtsensorvorrichtung **200** und die Steuereinheit **300** gemeinsam auf einem Grundträger **50** angeordnet sind, und gemeinsam mit dem Grundträger **50** eine Baueinheit bilden.

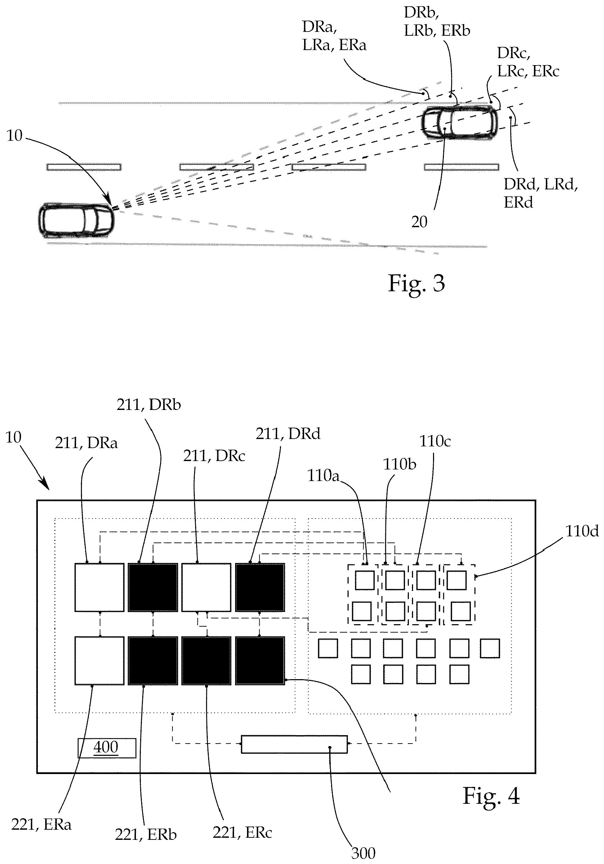

Die Leuchtpixel **110** des Leuchtpixel-Arrays sind in mehrere Leuchtpixel-Gruppen **110a, 110b, 110c, 110d** unterteilt, wobei jede Leuchtpixel-Gruppe zumindest ein Leuchtpixel **110** umfasst, und wobei jeweils eine Leuchtpixel-Gruppe **110a, 110b, 110c, 110d** ein Segment der segmentierten Lichtverteilung in einem Leucht-Raumwinkel **LRa, LRb, LRc, LRd** erzeugen kann, wie beispielsweise in **Fig. 3** schematisch zu sehen ist.

Jeweils ein Sensorpixel von den mehreren ersten Sensorpixeln **211** des ersten Lichtsensors **210** kann Licht in einem dem jeweiligen Sensorpixel **211** zugeordneten Detektions-Raumwinkel **DRa, DRb, DRc, DRd** - ebenfalls zu sehen in **Fig. 3** - detektieren und ist jeweils einer Leuchtpixel-Gruppe **110a, 110b, 110c, 110d** zugeordnet, wobei jedem Sensorpixel der mehreren ersten Sensorpixel **211** ein unterschiedlicher Detektions-Raumwinkel zugeordnet ist.

Die Detektions-Raumwinkel **DRa, DRb, DRc, DRd** grenzen dabei im Wesentlichen aneinander an und bilden einen Gesamt-Detektions-Raumwinkel, in welchen Licht des Licht abstrahlenden Objekts **20** erkannt werden kann, wobei das auf jeden ersten Sensorpixel **211** einfallende Licht als dem jeweiligen ersten Sensorpixel **211** zugeordneten Lichtstromwert erfassbar ist.

Der von einem ersten Sensorpixel **211** detektierbare Detektions-Raumwinkel **DRa, DRb, DRc, DRd** ist im Wesentlichen ident mit dem Leucht-Raumwinkel **LRa, LRb, LRc, LRd** der jeweils zugeordneten Leuchtpixel-Gruppe **110a**, **110b**, **100c**, **110d.**

Zur Abstands- bzw. Größenmessung des vor der Beleuchtungsvorrichtung **10** vorhandenen Objekts **20** umfasst die Beleuchtungsvorrichtung **10** eine Laserstrahlerzeugungseinrichtung **400,** welche eingerichtet ist, zumindest einen Laserstrahl **410** in einem Wellenlängenbereich von 780 nm bis 1 mm vor die Beleuchtungsvorrichtung **10** abzustrahlen und in horizontaler Orientierung zu verändern.

Der Laserstrahl **410** der Laserstrahlerzeugungseinrichtung **400** ist dabei scannend vor der Beleuchtungsvorrichtung **10** in zumindest einer horizontalen Zeile emittierbar, in dem gezeigten Beispiel in **Fig. 2** sind vier Zeilen dargestellt.

Zusätzlich umfasst die Lichtsensorvorrichtung **200** einen zweiten Lichtsensor **220,** welcher mehrere zweite Sensorpixel **221** umfasst, welche in einer Zeile angeordnet sind, wobei die zweiten Sensorpixel **221** eingerichtet sind, Lichtstrom im Wellenlängenbereich des Laserstrahls **410** der Lasererzeugungseinheit **400** von auf den zweiten Lichtsensor **220** einfallendem Licht zu erfassen. Jeweils ein Sensorpixel von den mehreren zweiten Sensorpixeln **221** kann Licht in einem dem jeweiligen Sensorpixel **221** zugeordneten Erkennungs-Raumwinkel **ERa, ERb, ERc, ERd** detektieren und ist jeweils einem Sensorpixel der mehreren ersten Sensorpixel **211** zugeordnet, wobei der Erkennungs-Raumwinkel dieses zweiten Sensorpixels **221** im Wesentlichen ident zum entsprechenden Detektions-Raumwinkel **DRa, DRb, DRc, DRd** des ersten Sensorpixels **211** ist. Die Anzahl der ersten Sensorpixel **211** entspricht dabei der Anzahl der zweiten Sensorpixel **221.**

Die Steuereinheit **300** ist ferner dazu eingerichtet, die von den jeweiligen ersten Sensorpixeln **211** detektierten Lichtstromwerte einzeln mit einem jeweils festlegbaren Schwellwert zu vergleichen und bei einem Überschreiten des Schwellenwertes den Lichtstrom der entsprechenden Leuchtpixel-Gruppen **110a, 110b, 110c, 110d** zu reduzieren.

Im Falle, dass in zwei Detektions-Raumwinkeln **DRb, DRd** ein Überschreiten des Schwellenwertes festgestellt wird und in zumindest einem zwischen dieser zwei Detektions-Raumwinkeln **DRb, DRd** ein Detektions-Raumwinkel **DRc** keine Überschreitung des Schwellenwertes festgestellt wird, wie im in **Fig. 3** und **4** gezeigten Beispiel dargestellt, so ist die Steuereinheit **300** eingerichtet, eine vermutliche Objektbreite des entgegenkommenden Fahrzeuges **20** abzuleiten, welche mit der Anzahl der ersten Sensorpixel **211,** welche sich aus den zwei Detektions-Raumwinkeln **DRb, DRd,** bei welchen der Schwellenwert überschritten ist, und den zwischen diesen zwei Detektions-Raumwinkeln liegenden Detektions-Raumwinkel **DRc** zusammensetzt, korrespondiert, und mit einer tatsächlichen Objektbreite zu vergleichen, welche tatsächliche Objektbreite mittels einer Laufzeitmessung und/oder Triangulationsmessung des an dem Fahrzeug **20** reflektierenden Laserstrahls **410** durch den zweiten Lichtsensor **220** ermittelbar ist.

Wenn die vermutliche Objektbreite nun mit der tatsächlichen Objektbreite übereinstimmt, so ist die Steuereinrichtung **300** eingerichtet, den Lichtstrom der entsprechenden Leuchtpixel-Gruppen **110b**, **110c**, **110d**, welche den ersten Sensorpixeln **211** der vermutlichen Objektbreite zugeordnet sind, trotz eines fehlenden Überschreitens des Schwellenwertes in dem Detektions-Raumwinkel **DRc** zwischen den Detektions-Raumwinkeln **DRb, DRd,** bei welchen der Schwellenwert überschritten ist, zu reduzieren.

Zusätzlich ist die Steuereinheit **300** eingerichtet, den Abstand des vor der Beleuchtungsvorrichtung **10** vorhandenen lichtabstrahlenden Objekts 20 zur Beleuchtungsvorrichtung **10** mittels einer Laufzeitmessung und/oder Triangulationsmessung mit Hilfe des zweiten Lichtsensors **220** zu ermitteln.

Ferner kann die Beleuchtungsvorrichtung **10** zur Aufweitung des Laserstrahls **410** der Lasererzeugungseinheit **400** eine Aufweitungsoptik umfassen, wobei die Aufweitungsoptik als Zylinderlinse ausgebildet ist, welche eingerichtet ist, den Laserstrahl **410** der Laserstrahlerzeugungseinrichtung **400** in vertikaler Richtung aufzuweiten.

Bei der Triangulationsmessung ist der Abstand zwischen der Lasererzeugungseinheit **400** und den einzelnen zweiten Sensorpixeln **221** des zweiten Lichtsensors **220** bekannt, wobei ebenso der Winkel, in welchem der Laserstrahl in seiner zumindest einen Zeile emittiert wird, bekannt ist und durch die Steuereinheit **300** ermittelbar bzw. abrufbar ist. Ferner ist ebenso der Winkel des an dem Objekt reflektierenden Laserstrahls erfassbar, beispielsweise durch den entsprechenden zweiten Sensorpixel **221** des zweiten Lichtsensors **220** und dadurch bekannt, wodurch der Abstand des Bereichs des Objekts, welcher Bereich von dem Laserstrahl getroffen und reflektiert wird, durch die Steuereinheit ermittelbar bzw. ausrechenbar ist.

Ferner kann vorgesehen sein, dass im Falle, dass in einem Detektions-Raumwinkel **DRa, DRb, DRc** ein Überschreiten des Schwellenwertes festgestellt wird, die Steuereinheit eingerichtet ist, eine vermutliche Objektbreite abzuleiten, welche mit dem ersten Sensorpixel **211** korrespondiert, bei welchem der Schwellenwert überschritten ist, und mit einer tatsächlichen Objektbreite zu vergleichen, welche tatsächlich Objektbreite mittels einer Laufzeitmessung und/oder Triangulationsmessung des an dem Objekt **20** reflektierenden Laserstrahls **410** durch den zweiten Lichtsensor **220** ermittelbar ist, wobei die tatsächliche Objektbreite mit der Anzahl der zweiten Sensorpixel korrespondiert, bei welcher Licht des an dem Objekt reflektierenden Laserstrahles erfasst wird, wobei wenn
die tatsächlich Objektbreite größer ist als die vermutliche Objektbreite, die Steuereinrichtung eingerichtet ist, den Lichtstrom jener Leuchtpixel-Gruppen **110a, 110b, 110c** zu reduzieren, welche mit dem ersten Sensorpixel, bei welchem der Schwellenwert überschritten wurde, und mit jenen ersten Sensorpixeln **211** korrespondieren, deren Detektions-Raumwinkel unmittelbar benachbart zu jenem Detektions-Raumwinkel ist, bei welchen ein Überschreiten des Schwellenwertes festgestellt wurde, oder den ersten Sensorpixeln, welche mit den zweiten Sensorpixeln korrespondieren, bei welchen die tatsächliche Objektbreite ermittelt wurde.

**BEZUGSZEICHENLISTE**

| | |
|---|---|
| Beleuchtungsvorrichtung... | 10 |
| Objekt, Fahrzeug... | 20 |
| Grundträger... | 50 |
| Lichterzeugungseinheit... | 100 |
| Leuchtpixel... | 110 |
| Leuchtpixel-Gruppen... | 110a, 110b, 110c, 110d |
| Lichtsensorvorrichtung... | 200 |
| Erster Lichtsensor... | 210 |
| Erste Sensorpixel... | 211 |
| Zweiter Lichtsensor... | 220 |
| Zweite Sensorpixel... | 221 |
| Steuereinheit... | 300 |
| Lasererzeugungseinheit... | 400 |
| Laserstrahl... | 410 |
| Leucht-Raumwinkel... | LRa, LRb, LRc, LRd |
| Detektions-Raumwinkel... | DRa, DRb, DRc, DRd |
| Erkennungs-Raumwinkel... | ERa, ERb, ERc, ERd |

## Patentansprüche

1. Beleuchtungsvorrichtung (10) für einen Kraftfahrzeugscheinwerfer zum Erkennen und gezielten Ausblenden eines vor der Beleuchtungsvorrichtung (10) vorhandenen, Licht abstrahlenden Objekts (20) in einer segmentierten Lichtverteilung, welche Beleuchtungsvorrichtung (10) Folgendes umfasst:
- eine Lichterzeugungseinheit (100), welche mehrere Leuchtpixel (110) umfasst, welche in einem Leuchtpixel-Array in einer oder mehreren Zeilen und Spalten angeordnet sind, wobei die Lichterzeugungseinheit (100) eingerichtet ist, eine segmentierte Lichtverteilung in eine Hauptabstrahlrichtung vor der Beleuchtungsvorrichtung (10) abzustrahlen,
- eine Lichtsensorvorrichtung (200) zum Erkennen von Licht eines Licht abstrahlenden Objekts (20) mit einem ersten Lichtsensor (210), welcher erste Lichtsensor (210) mehrere erste Sensorpixel (211) aufweist, welche in einer Zeile angeordnet sind, wobei die ersten Sensorpixel (211) eingerichtet sind, Lichtstrom von auf den ersten Lichtsensor (210) einfallendem Licht in einem Wellenlängenbereich von 380 nm bis 780 nm zu erfassen,
- eine Steuereinheit (300), welche mit der Lichterzeugungseinheit (100) und der Lichtsensorvorrichtung (200) verbunden ist und eingerichtet ist, die Lichterzeugungseinheit (100) zur Erzeugung der segmentierten Lichtverteilung anzusteuern,
**dadurch gekennzeichnet, dass**
die Lichterzeugungseinheit (100), die Lichtsensorvorrichtung (200) und die Steuereinheit (300) gemeinsam auf einem Grundträger (50) angeordnet sind, und gemeinsam mit dem Grundträger (50) eine Baueinheit bilden,
wobei die Leuchtpixel (110) des Leuchtpixel-Arrays in mehrere Leuchtpixel-Gruppen (110a, 110b, 110c, 110d) unterteilt sind, wobei jeweils eine Leuchtpixel-Gruppe (110a, 110b, 110c, 110d) ein Segment der segmentierten Lichtverteilung in einem Leucht-Raumwinkel (LRa, LRb, LRc, LRd) erzeugen kann, wobei jede Leuchtpixel-Gruppe zumindest ein Leuchtpixel (110) umfasst,
und wobei jeweils ein Sensorpixel von den mehreren ersten Sensorpixeln (211) Licht in einem dem jeweiligen Sensorpixel (211) zugeordneten Detektions-Raumwinkel (DRa, DRb, DRc, DRd) detektieren kann und jeweils einer Leuchtpixel-Gruppe (110a, 110b, 110c, 110d) zugeordnet ist, wobei jedem Sensorpixel der mehreren ersten Sensorpixel (211) ein unterschiedlicher Detektions-Raumwinkel zugeordnet ist, wobei die Detektions-Raumwinkel (DRa, DRb, DRc, DRd) im Wesentlichen aneinander angrenzen und einen Gesamt-Detektions-Raumwinkel bilden, in welchen Licht des Licht abstrahlenden Objekts (20) erkannt werden kann, und wobei das auf jeden ersten Sensorpixel (211) einfallende Licht als dem jeweiligen ersten Sensorpixel (211) zugeordneten Lichtstromwert erfassbar ist,
wobei der von einem ersten Sensorpixel (211) detektierbare Detektions-Raumwinkel (DRa, DRb, DRc, DRd) im Wesentlichen ident ist mit dem Leucht-Raumwinkel (LRa, LRb, LRc, LRd) der jeweils zugeordneten Leuchtpixel-Gruppe (110a, 110b, 100c, 110d),
wobei die Beleuchtungsvorrichtung (10) zur Abstandsmessung des vor der Beleuchtungsvorrichtung (10) vorhandenen Objekts (20) eine Laserstrahlerzeugungseinrichtung (400) aufweist, welche eingerichtet ist, zumindest einen Laserstrahl (410) in einem Wellenlängenbereich von 780 nm bis 12 µm vor die Beleuchtungsvorrichtung (10) abzustrahlen und in horizontaler Orientierung zu verändern,
wobei die Lichtsensorvorrichtung (200) zusätzlich einen zweiten Lichtsensor (220) umfasst, welcher zweite Lichtsensor (220) mehrere zweite Sensorpixel (221) umfasst, welche in einer Zeile angeordnet sind, wobei die zweiten Sensorpixel (221) eingerichtet sind, Lichtstrom im Wellenlängenbereich des Laserstrahls (410) der Laserstrahlerzeugungseinheit (400) von auf den zweiten Lichtsensor (220) einfallendem Licht zu erfassen,
und wobei die Steuereinheit (300) eingerichtet ist, die von den jeweiligen ersten Sensorpixeln (211) detektierten Lichtstromwerte einzeln mit einem jeweils festlegbaren Schwellwert zu vergleichen und bei einem Überschreiten des Schwellenwertes den Lichtstrom der entsprechenden Leuchtpixel-Gruppen (110a, 110b, 110c, 110d) zu reduzieren,
wobei im Falle, dass in zwei Detektions-Raumwinkeln (DRa, DRc) ein Überschreiten des Schwellenwertes festgestellt wird und in zumindest einem zwischen dieser zwei Detektions-Raumwinkeln (DRa, DRc) ein Detektions-Raumwinkel (DRb) keine Überschreitung des Schwellenwertes festgestellt wird, die Steuereinheit (300) eingerichtet ist, eine vermutliche Objektbreite abzuleiten, welche mit der Anzahl der ersten Sensorpixel (211), welche sich aus den zwei Detektions-Raumwinkeln (DRa, DRc), bei welchen der Schwellenwert überschritten ist, und den zwischen diesen zwei Detektions-Raumwinkeln liegenden Detektions-Raumwinkeln (DRc) zusammensetzt, korrespondiert, und mit einer tatsächlichen Objektbreite zu vergleichen, welche tatsächliche Objektbreite mittels einer Laufzeitmessung und/oder Triangulationsmessung des an dem Objekt (20) reflektierenden Laserstrahls (410) durch den zweiten Lichtsensor (220) ermittelbar ist,
wobei wenn die vermutliche Objektbreite mit der tatsächlichen Objektbreite übereinstimmt, die Steuereinrichtung (300) eingerichtet ist, den Lichtstrom der entsprechenden Leuchtpixel-Gruppen (110a, 110b, 110c), welche den ersten Sensorpixeln (211) der vermutlichen Objektbreite zugeordnet sind, trotz eines fehlenden Überschreitens des Schwellenwertes in den Detektions-Raumwinkeln (DRb) zwischen den Detektions-Raumwinkeln (DRa, DRc), bei welchen der Schwellenwert überschritten ist, zu reduzieren.

2. Beleuchtungsvorrichtung nach Anspruch 1, **dadurch gekennzeichnet, dass** im Falle, dass in einem Detektions-Raumwinkel (DRa, DRb, DRc) ein Überschreiten des Schwellenwertes festgestellt wird, die Steuereinheit eingerichtet ist, eine vermutliche Objektbreite abzuleiten, welche mit dem ersten Sensorpixel (211) korrespondiert, bei welchem der Schwellenwert überschritten ist, und mit einer tatsächlichen Objektbreite zu vergleichen, welche tatsächlich Objektbreite mittels einer Laufzeitmessung und/oder Triangulationsmessung des an dem Objekt (20) reflektierenden Laserstrahls (410) durch den zweiten Lichtsensor (220) ermittelbar ist, wobei die tatsächliche Objektbreite mit der Anzahl der zweiten Sensorpixel korrespondiert, bei welcher Licht des an dem Objekt reflektierenden Laserstrahles erfasst wird, wobei wenn
die tatsächlich Objektbreite größer ist als die vermutliche Objektbreite, die Steuereinrichtung eingerichtet ist, den Lichtstrom jener Leuchtpixel-Gruppen (110a, 110b, 110c) zu reduzieren, welche mit dem ersten Sensorpixel, bei welchem der Schwellenwert überschritten wurde, und mit jenen ersten Sensorpixeln (211) korrespondieren, deren Detektions-Raumwinkel unmittelbar benachbart zu jenem Detektions-Raumwinkel ist, bei welchen ein Überschreiten des Schwellenwertes festgestellt wurde, oder den ersten Sensorpixeln, welche mit den zweiten Sensorpixeln korrespondieren, bei welchen die tatsächliche Objektbreite ermittelt wurde.

3. Beleuchtungsvorrichtung nach Anspruch 1 oder 2, **dadurch gekennzeichnet, dass** jeweils ein Sensorpixel von den mehreren zweiten Sensorpixeln (221) Licht in einem dem jeweiligen Sensorpixel (221) zugeordneten Erkennungs-Raumwinkel (ERa, ERb, ERc, ERd) detektieren kann und jeweils einem Sensorpixel der mehreren ersten Sensorpixel (211) zugeordnet ist, wobei der Erkennungs-Raumwinkel dieses zweiten Sensorpixels (221) im Wesentlichen ident zum entsprechenden Detektions-Raumwinkel (DRa, DRb, DRc, DRd) des ersten Sensorpixels (211) ist.

4. Beleuchtungsvorrichtung nach einem der Ansprüche 1 bis 3, **dadurch gekennzeichnet, dass** der zumindest eine Laserstrahl (410) der Laserstrahlerzeugungseinrichtung (400) scannend vor der Beleuchtungsvorrichtung (10) in zumindest einer horizontalen Zeile emittierbar ist.

5. Beleuchtungsvorrichtung nach Anspruch 4, **dadurch gekennzeichnet, dass** der Laserstrahl (410) in zumindest zwei, vorzugsweise vier, Zeilen abwechselnd emittierbar ist, wobei der Laserstrahl (410) jeweils nur in eine der zumindest zwei Zeilen scannend emittierbar ist.

6. Beleuchtungsvorrichtung nach einem der Ansprüche 1 bis 5, **dadurch gekennzeichnet, dass** die Anzahl der ersten Sensorpixel (211) gleich der Anzahl der zweiten Sensorpixel (221) ist.

7. Beleuchtungsvorrichtung nach einem der Ansprüche 1 bis 6, **dadurch gekennzeichnet, dass** die Steuereinheit (300) eingerichtet ist, den Abstand des vor der Beleuchtungsvorrichtung (10) vorhandenen lichtabstrahlenden Objekts (20) zur Beleuchtungsvorrichtung (10) mittels einer Laufzeitmessung und/oder Triangulationsmessung mit Hilfe des zweiten Lichtsensors (220) zu ermitteln.

8. Beleuchtungsvorrichtung nach einem der Ansprüche 1 bis 7, **dadurch gekennzeichnet, dass** die segmentierte Lichtverteilung als segmentierte Fernlichtverteilung ausgebildet ist.

9. Beleuchtungsvorrichtung nach einem der Ansprüche 1 bis 8, **dadurch gekennzeichnet, dass** die Beleuchtungsvorrichtung (10) zur Aufweitung des Laserstrahls (410) der Lasererzeugungseinheit (400) eine Aufweitungsoptik umfasst.

10. Beleuchtungsvorrichtung nach Anspruch 9, **dadurch gekennzeichnet, dass** die Aufweitungsoptik als Zylinderlinse ausgebildet ist, welche eingerichtet ist, den Laserstrahl (410) der Lasererzeugungseinrichtung (400) in vertikaler Richtung aufzuweiten.

11. Beleuchtungsvorrichtung nach einem der Ansprüche 1 bis 10, **dadurch gekennzeichnet, dass** die ersten Sensorpixeln (211) und die zweiten Sensorpixeln (221) in Einbaulage der Beleuchtungsvorrichtung übereinander in jeweils einer Zeile auf einer gemeinsamen Leiterplatte und besonders bevorzugt, dass die ersten Sensorpixel und die zweiten Sensorpixel auf dem selben Sensorchipangeordnet sind, und wobei die Beleuchtungsvorrichtung eine Sensorlinse umfasst, welcher den ersten und zweiten Sensorpixeln (211, 221) zugeordnet ist.

12. Beleuchtungsvorrichtung nach Anspruch 11, **dadurch gekennzeichnet, dass** die Sensorlinse als Zylinderlinse ausgebildet ist.

13. Beleuchtungsvorrichtung nach Anspruch 11 oder 12, **dadurch gekennzeichnet, dass** die ersten Sensorpixeln (211) einen ersten Filter aufweisen, welcher eingerichtet ist, Licht ausschließlich im Wellenlängenbereich von 380 nm bis 780 nm zu transmittieren, wobei die zweiten Sensorpixel (221) einen zweiten Filter aufweisen, welcher eingerichtet ist, Licht ausschließlich im Wellenlängenbereich von 780 nm bis 12 µm zu transmittieren.

14. Beleuchtungsvorrichtung nach einem der Ansprüche 1 bis 13, **dadurch gekennzeichnet, dass** der zumindest eine Laserstrahl der Laserstrahlerzeugungseinrichtung (400) moduliert ist.

15. Kraftfahrzeugscheinwerfer umfassend zumindest einer Beleuchtungsvorrichtung nach einem der Ansprüche 1 bis 14.
